# EUROPEAN PATENT APPLICATION

(11) **EP 4 751 541 A1**
(43) Date of publication of application: **03.06.2026**
(21) Application number: 23941275.2
(22) Date of filing: 24.10.2023
(51) Int. Cl.: A01D 34/00, B25J 5/00

(54) **OPERATION ROBOT**

(30) Priority: 16.06.2023 CN 202310724634; 16.06.2023 CN 202321557190 U
(71) Applicant: Shenzhen Hanyang Technology Co., Ltd., Shenzhen, Guangdong 518000 (CN)
(72) Inventor: HUANG, Yang, Shenzhen, Guangdong 518000 (CN); ZHU, Taotao, Shenzhen, Guangdong 518000 (CN); SONG, Yongqi, Shenzhen, Guangdong 518000 (CN); LI, Haitao, Shenzhen, Guangdong 518000 (CN)
(74) Representative: Abel & Imray LLP
(86) International application number: PCT/CN2023/126266
(87) International publication number: WO 2024/255051

(57) **Abstract**

Disclosed is an operation robot.The operation robot includes a functional mechanism and a mobile robot, where the mobile robot includes a vehicle body, a support, and a lifting mechanism. The support is mounted to the vehicle body in a pitching rotation manner, and the functional mechanism is detachably mounted to the support. The lifting mechanism is mounted in the vehicle body and operatively coupled to the support, and drives the support to rotate, so as to drive the functional mechanism to perform pitching motion relative to the mobile robot.

## Description

### CROSS-REFERENCE TO RELATED APPLICATIONS

The present disclosure claims the priority to and benefit of Invention Patent Application No. 202310724634.0 filed with the Chinese Patent Office on June 16, 2023 and the priority to and benefit of Utility Model Patent Application No. 2023215571908 filed with the CNIPA on June 16, 2023, which are incorporated herein in their entireties by reference.

### TECHNICAL FIELD

The present disclosure relates to the technical field of intelligent operation apparatuses, and in particular, to an operation robot.

### BACKGROUND

At present, operation robots are usually used to replace manual operation to liberate manpower and facilitate lives of people. The operation robots generally include a moving body and an actuator device assembled to the moving body, and the functional mechanism is driven by the moving body to operate in a predetermined area. However, the current actuator device is generally fixed, and cannot satisfy diversified needs of users.

### SUMMARY

A main objective of the present disclosure is to provide an operation robot for solving the technical problem that diversified needs of users are difficult to satisfy since a functional mechanism in an operation robot is fixed.

In order to achieve the above objective, embodiments of the present disclosure provide an operation robot. The operation robot includes a functional mechanism and a mobile robot, where the mobile robot includes a vehicle body, a support, and a lifting mechanism; the support is mounted to the vehicle body in a pitching rotation manner, and the functional mechanism is detachably mounted to the support; and the lifting mechanism is mounted in the vehicle body and operatively coupled to the support, and drives the support to rotate, so as to drive the functional mechanism to perform pitching motion relative to the mobile robot.

According to the operation robot provided by the embodiments of the present disclosure, the support fixing the functional mechanism is mounted to the vehicle body of the mobile robot, the functional mechanism is detachably mounted to the support, the support is assembled to the vehicle body in a pitching manner, and the lifting mechanism is assembled in the vehicle body. Thus, an overall size of the mobile robot is reduced, an overall integration degree is increased, the support can perform pitching motion when driven by the lifting mechanism, and the functional mechanism is driven to perform pitching motion accordingly.

During an operation process of the operation robot, the mobile robot can control the functional mechanism to perform pitching motion according to different conditions. For example, in the presence of an obstacle, the mobile robot can control the functional mechanism to perform upward pitching motion, and cross the obstacle without bypassing the obstacle. For example, when operation targets are located at different heights and different angles, the mobile robot can control the functional mechanism to perform pitching motion, and perform operation on the operation targets at different heights and different angles. For example, when the functional mechanism is replaced, the mobile robot controls the functional mechanism to perform pitching motion, and moves to a height and an angle that facilitate replacement by users, and diversified needs of the users are satisfied.

### BRIEF DESCRIPTION OF THE DRAWINGS

To describe technical solutions in implementations of the present disclosure more clearly, accompanying drawings required by description of the implementations will be briefly described below. Apparently, the accompanying drawings in the following description merely show some implementations of the present disclosure, and those of ordinary skill in the art can still derive other accompanying drawings from these accompanying drawings without creative efforts.
FIG. 1 is a schematic structural diagram of an exploded view of an operation robot according to an embodiment of the present disclosure;
FIG. 2 is a schematic structural diagram of a mobile robot of the operation robot of

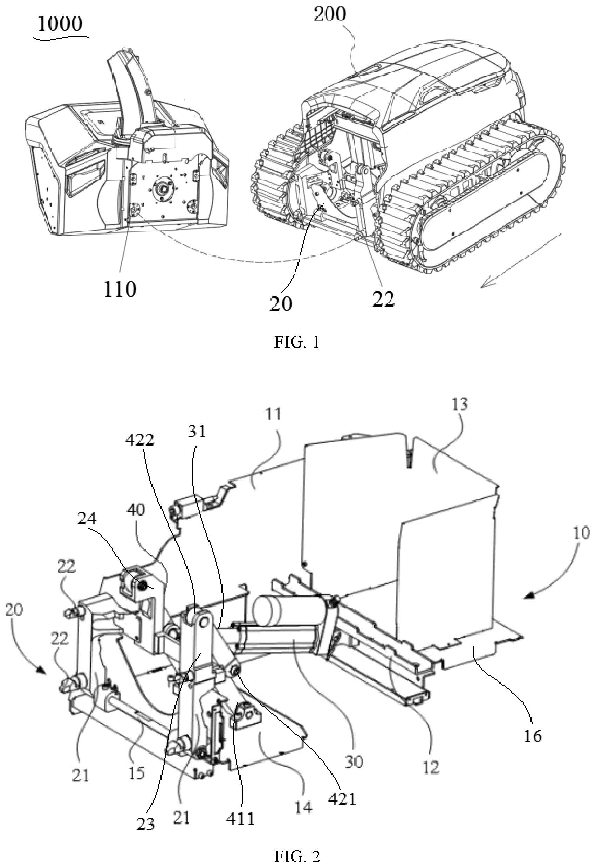

FIG. 1 from a perspective (where a lifting mechanism is in an extended limit state);

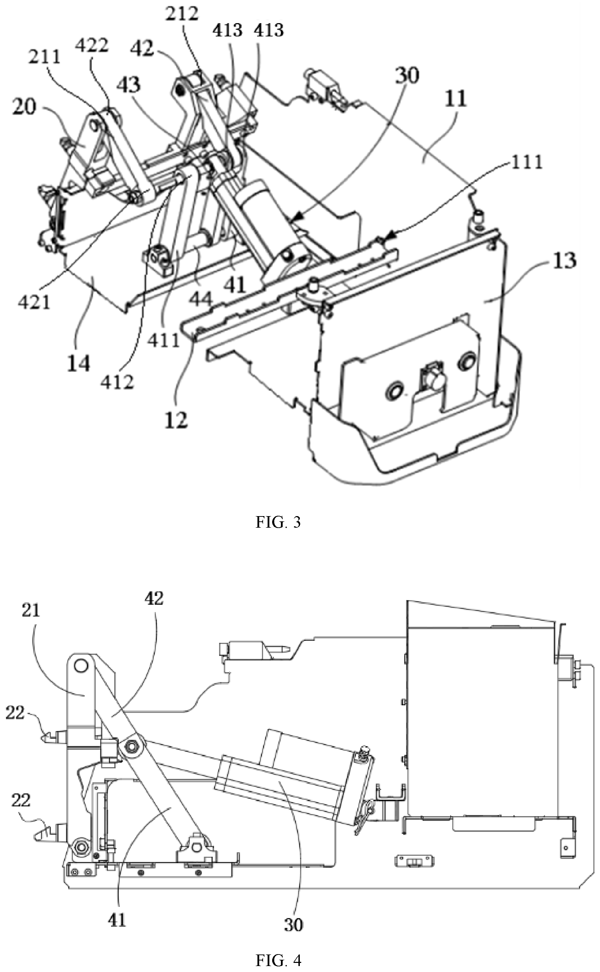

FIG. 3 is a schematic structural diagram of a mobile robot of the operation robot of
FIG. 1 from another perspective (where a lifting mechanism is in an retracted limit state);
FIG. 4 is a side view of the mobile robot of the operation robot of FIG. 1 with an electric push rod extended to a limit position;

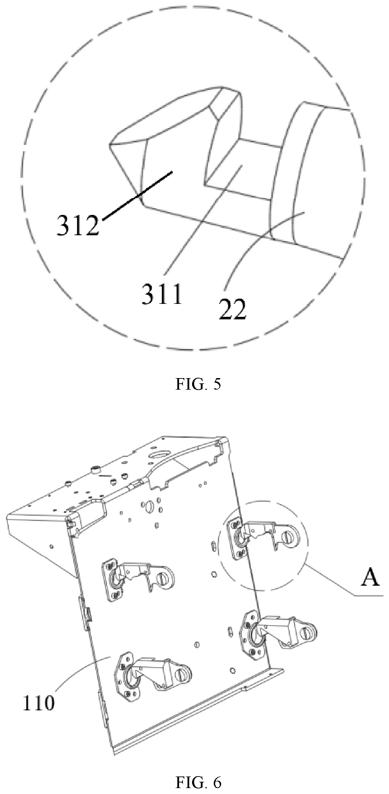

FIG. 5 shows a partial enlarged view of a mounting portion of the mobile robot of FIG. 4;
FIG. 6 shows a schematic diagram of a partial structural of a functional mechanism of the operation robot of FIG. 1; and

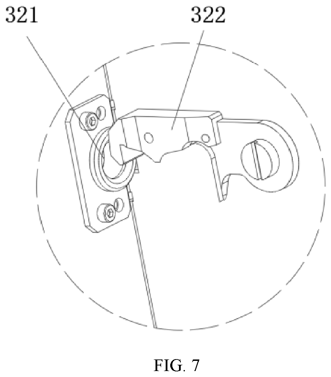

FIG. 7 shows a schematic structural diagram of an enlarged view of the functional mechanism of FIG. 6 at portion A.

### Description of reference numerals:

10. vehicle body; 11. side plate. 12. support beam; 13. back coupling plate; 14. bottom plate; 15. third rotary shaft; 20. support; 21. upright post; 22. mounting portion; 30. lifting mechanism; 40. linkage mechanism; 41. first link; 413. lug plate; 42. second link; 43. first rotary shaft; 44. second rotary shaft; 200. mobile robot; 110. functional mechanism; 311. snap-fit recess; 312. insertion post; 321. insertion hole; 322. latch; 31. output end; 16. shell; 111. perforation; 411. first end of first link; 412. second end of first link; 421. first end of second link; 422. second end of second link; 23. first connecting point; 24. second connecting point; 211. first limiting surface; 212. second limiting surface; and 1000. operation robot.

### DETAILED DESCRIPTION

To make the solutions in the present disclosure to be better understood by those of ordinary skill in the art, the technical solutions in the implementations of the present disclosure will be clearly and completely described below with reference to the accompanying drawings in the implementations of the present disclosure. Apparently, the described implementations are merely some implementations rather than all implementations of the present disclosure. All other implementations derived by those of ordinary skill in the art from the implementations of the present disclosure without creative efforts should fall within the protection scope of the present disclosure.

Technical solutions in the implementations of the present disclosure will be described below clearly and comprehensively in conjunction with accompanying drawings in the implementations of the present disclosure.

By replacing manual operation with intelligent operation, operation robots bring convenience to lives of people and are also conducive to liberation of manpower.

The operation robots generally include a moving body and an actuator device assembled to the moving body, and the actuator device is driven by the moving body to operate in a predetermined area. However, the current actuator device is generally fixed, and cannot satisfy diversified needs of users.

With reference to FIG. 1 to FIG. 3, the embodiments of the present disclosure provide an operation robot 1000. The operation robot 1000 includes a functional mechanism 110 and a mobile robot 200. The mobile robot 200 includes a vehicle body 10, a support 20, and a lifting mechanism 30. The functional mechanism 110 is detachably mounted to the support, and the lifting mechanism 30 may drive the support 20 to perform pitching motion and rotation relative to the vehicle body 10, to drive the functional mechanism 110 fixed to the support 20 to perform pitching motion relative to the mobile robot 200. Thus, obstacle avoidance, and operation at different heights and different angles are implemented, and diversified needs of users are satisfied.

Since the functional mechanism 110 is detachably mounted to the support 20, the functional mechanism 110 or/and the mobile robot is conveniently maintained and repaired, and the functional mechanisms 110 having different functions are changed conveniently. In addition, since the functional mechanism 110 is detachable from the support 20, the same support 20 may be adapted to the functional mechanisms 110 having different operation mechanisms. Thus, the operation robot 1000 can be applied to different use scenarios.

The mobile robot 200 of the operation robot 1000 of the present disclosure will be described in detail below with the operation robot 1000 applied to a yard as an example.

The vehicle body 10 may include a moving mechanism, and the moving mechanism may be a crawler traveling mechanism in the prior art, or a moving chassis having wheels in the prior art as long as a moving capability on ground in different environments can be achieved, which is not limited herein.

The support 20 is mainly configured to fix the functional mechanism 110, to be assembled with the functional mechanism 110 and the vehicle body 10. Support is also provided for the functional mechanism 110.

The pitching of the support 20 on the vehicle body 10 is mainly driven by the lifting mechanism 30. The lifting mechanism 30 is mounted in the vehicle body 10. Overall integration of the mobile robot 200 is improved, occupied space is reduced, and an overall size of the mobile robot 200 is reduced.

The lifting mechanism 30 is operatively coupled to the support 20, and drives the support 20 to rotate, so as to drive the functional mechanism 110 to perform pitching motion.

It should be noted that the moving body may have a Bluetooth module, a wifi module, or a real-time kinematic (RTK) module, etc. built-in, to move in a predetermined area along a predetermined route, and drive the actuator device to operate in some implementations.

The lifting mechanism 30 may be a linear drive member that has a simple and reliable driving mode and low cost.

In some implementations, the support 20 fixing the functional mechanism 110 is mounted to the vehicle body 10 of the mobile robot 200, the support 20 is assembled to the vehicle body 10 in a pitching manner, and the lifting mechanism 30 is assembled in the vehicle body 10. Thus, an overall size of the mobile robot 200 is reduced, an overall integration degree is increased, the support 20 can perform pitching motion when driven by the lifting mechanism 30, and the functional mechanism 110 is driven to perform pitching motion accordingly.

During an operation process of the robot 1000, the mobile robot 200 can control the functional mechanism 110 to perform pitching motion according to different conditions. For example, in the presence of an obstacle, the mobile robot 200 can control the functional mechanism 110 to perform upward pitching motion, to cross the obstacle without bypassing the obstacle. For example, when operation targets are located at different heights and different angles, the mobile robot 200 can control the functional mechanism 110 to perform pitching motion, and perform operation on the operation targets at different heights and different angles. For example, when the functional mechanism 110 is replaced, the mobile robot 200 controls the functional mechanism 110 to perform pitching motion, and moves to a height and an angle that facilitate replacement by users, and diversified needs of the users are satisfied.

The lifting mechanism 30 may be a linear drive member, and specifically, an electric push rod. The electric push rod is rotatably mounted to the vehicle body 10, and an output end 31 of the electric push rod is operatively coupled to the support 20. It is clear that in other embodiments, the lifting mechanism 30 may alternatively be another linear drive member, such as an air cylinder, a hydraulic cylinder, a linear motor, and a linear electric cylinder.

In some implementations, the vehicle body 10 may include a shell 16 and a support beam 12, and the shell 16 has two side plates 11 oppositely arranged. The two side plates 11 each define a perforation 111, and the support beam 12 extends through the perforations 111 in two sides, to extend through the two side plates 11. The lifting mechanism 30 is mounted to the support beam 12.

Specifically, the shell 16 may further include a back coupling plate 13, and the two side plates 11 are coupled to two opposite sides of the back coupling plate 13, to form enclosing coupling.

The support beam 12 extends through the two side plates 11, and extends out of the two side plates 11, to be erected on the shell 16. Thus, the support beam 12 has high structural strength and stability of fixation to the shell 16. A load of the support beam is borne by the shell 16, further ensuring mounting stability of the lifting mechanism 30 mounted to the support beam 12.

In some implementations, the support beam 12 may be located between a top and a bottom of the shell 16, to be higher than a bottom of each side plate 11. In this way, when a stroke of the lifting mechanism 30 is designed, the stroke may be set shorter to improve driving stability of the lifting mechanism when the lifting mechanism drives the support 20 to move.

It is clear that in a process that the lifting mechanism 30 drives the support 20 to perform pitching motion, a load of the functional mechanism 110 is at least partially borne by the lifting mechanism 30. The lifting mechanism 30 may be mounted in a middle of the support beam 12, and a driving end may be coupled to a middle of the support 20 correspondingly. Thus, the lifting mechanism 30 can provide sufficient and stable driving performance and supporting performance for the support 20 to a great extent, and supporting strength and driving force for the support 20 may be substantially equal everywhere.

The lifting mechanism 30 is rotatably mounted to the support beam 12. Specifically, a rotary shaft is mounted at a lower side of the support beam 12, and the lifting mechanism 30 is mounted to the rotary shaft. Thus, the lifting mechanism can rotate relative to the support beam 12, and flexibility of the lifting mechanism when driving the support 20 to move can be improved.

In order to further improve the flexibility of the lifting mechanism 30 when driving the support 20 to move, and reduce the stroke of the lifting mechanism 30 and ensure driving stability, the mobile robot 200 further includes a linkage mechanism 40 located between the lifting mechanism 30 and the support 20. The lifting mechanism 30 is operatively coupled to the support 20 through the linkage mechanism 40.

In this way, the lifting mechanism 30 does not need to be operatively coupled to the support 20 directly, and the flexibility of the linkage mechanism 40 effectively reduces design complexity of a driving mechanism for driving the support 20 to perform pitching motion. Linear movement of the lifting mechanism 30 is converted into circular movement of the support 20. Thus, the driving mechanism can be merely designed as the lifting mechanism 30 (electric push rod), with a simple structure, stable operation, and low cost.

Specifically, the linkage mechanism 40 includes a first link 41 and a second link 42.

A first end 411 of the first link 41 is rotatably mounted to a bottom plate 14 of the vehicle body 10, and a second end 412 of the first link 41 is rotatably coupled to the output end 31. A first end 421 of each second link 42 is rotatably mounted to the output end 31 of the electric push rod, and a second end 422 of each second link 42 is rotatably coupled to the support 20.

In order to facilitate mounting of the linkage mechanism 40, the linkage mechanism 40 further includes a first rotary shaft 43, the first rotary shaft 43 is rotatably mounted to the output end 31 of the electric push rod, the second end 412 of the first link 41 is rotatably coupled to the first rotary shaft 43, and the first end 421 of each second link 42 is rotatably coupled to the first rotary shaft 43.

In this way, the electric push rod drives the first rotary shaft 43 to move, to drive the first link 41 and the second link 42 to move and further drive the support 20 to perform pitching motion.

It is clear that in order to facilitate mounting of the first link 41, the linkage mechanism 40 further includes a second rotary shaft 44, the second rotary shaft 44 is rotatably mounted to the bottom plate 14 of the vehicle body 10, and the first end 411 of the first link 41 is rotatably coupled to the rotary shaft.

In some implementations, in order to improve operative stability of the linkage mechanism 40 operating the support 20, the support 20 has a first connecting point 23 and a second connecting point 24 that are spaced apart from each other, and two second links 42 are provided. The first ends 421 of the two second links 42 are rotatably coupled to two ends of the first rotary shaft 43 respectively, and the second ends 422 of the two second links 42 are rotatably coupled to the first connecting point 23 and the second connecting point respectively 24. The output end 31 of the electric push rod is located between the first ends 421 of the two second links 42.

With such arrangement, in a driving process of the lifting mechanism 30, the lifting mechanism 30 firstly drives the first rotary shaft 43 to move, and the first rotary shaft 43 drives the two second links 42 to move, and the first ends 421 of the two second links 42 are rotatably coupled to the two ends of the first rotary shaft 43. Thus, the operation of the two second links 42 is stable.

In some implementations, the two second links 42 synchronously drive the first connecting point 23 and the second connecting point 24 of the support 20 to move, to make the support 20 perform pitching motion and rotation as a whole. It can be understood that two stress points of push on the support 20 exist and are spaced apart horizontally, such that thrust at the two sides of the support 20 are substantially equal, and rotational stability of the support 20 in a pitching and rotation process is guaranteed.

In some implementations, in order to ensure the operative stability and mounting stability between the first link 41 and the second link 42, the second end 412 of the first link 41 has two lug plates 413 oppositely arranged, the two lug plates 413 are rotatably coupled to the first rotary shaft 43, the first end 421 of each second link 42 is located between the two lug plates 413, and the two lug plates 413 are capable of limiting sliding, on the first rotary shaft 43 in an axial direction of the first rotary shaft 43, of the first end 421 of each second link 42.

In this way, the second links 42 are limited by the two lug plates 413, and are unlikely to be separated from the first rotary shaft 43.

It is clear that in some embodiments, further, coupling of one of the first links 41 to a corresponding second link 42 can be arranged according to the above embodiment, and the second link 42 and the other second link 42 may be spaced apart from each other. Thus, overall occupied space of the linkage mechanism 40 is reduced, and layout of other electrical components in the vehicle body 10 is facilitated.

In some other embodiments, further, links between the two first links 41 and two corresponding second links 42 may be arranged according to the above embodiment.

In order to improve structural stability of the support 20 with the electric push rod in an extended limit state, and make the functional mechanism 110 in a predetermined state (a predetermined angle and/or a predetermined height) stably, in some embodiments, the support 20 is provided with a first limiting surface 211. When the electric push rod is extended to the limit position, the first limiting surface 211 may limit rotation of the second link 42. It can be understood that the second link 42 may be provided with a corresponding first limiting structure in limit fit with the first limiting surface 211.

For example, the second link 42 may have a front surface oriented towards the support 20, and the front surface is the first limiting structure. When the electric push rod is in the extended limit state, the first limiting face 211 is in limit fit with the front surface of the second link 42.

For example, the second link 42 may have a front surface oriented towards the support 20 and a side surface adjacent to the front surface, and the side surface has a limiting step. The limiting step is the first limiting structure, and when the electric push rod is in the extended limit state, the first limiting surface 211 is in limit fit with a step surface of the limiting step.

In this embodiment, when two second links 42 are arranged, the limiting structure of one second link 42 is arranged on the front surface, and the limiting structure of the other second link 42 is arranged on the limiting step at the side surface. In this way, the two links are in limit fit with the support 20, such that a plurality of limiting fit positions exist between the support 20 and the linkage mechanism 40, and the structural stability of the support 20 when the electric push rod is in the extended limit state is further improved.

In order to improve structural stability of the support 20 with the electric push rod in a retracted limit state, and make the functional mechanism 110 in a predetermined state (a predetermined angle and/or a predetermined height) stably, in some embodiments, the support 20 is provided with a second limiting surface 212. When the electric push rod is retracted to the limit position, the second limiting surface 212 may limit rotation of the second link 42. It can be understood that the second link 42 may be provided with a corresponding second limiting structure in limit fit with the second limiting surface 212.

For example, the second link 42 may have a front surface oriented towards the support 20 and a back surface opposite the front surface, and the back surface constitutes the second limiting structure. When the electric push rod is in the retracted limit state, the second limiting surface 212 is in fit with the back surface of the second link 42.

In some implementations, two second links 42 may be arranged. The front surface and the back surface of one second link 42 are the first limiting structure and the second limiting structure respectively. The side surface of the other second link 42 has the limiting step, and the limiting step is the first limiting structure.

In order to reduce driving strength of the electric push rod in an extension process and reduce energy consumption of the electric push rod, the second end of the second link 42 is rotatably coupled to a top of the support 20.

It can be understood that a bottom of the support 20 is rotatably coupled to the bottom plate 14 of the vehicle body 10. In this way, when the support 20 performs pitching motion and rotation, the support performs circular movement around a rotational coupling position (that is, a support point). That is, the farther away the coupling position between the second end of the second link 42 and the support 20 from the bottom of the support 20 is (that is, the longer an arm of force), the smaller thrust of the second link 42 driving the support 20 to rotate is (that is, the smaller the required force is), the lower the energy consumption of the electric push rod becomes.

Based on that, the second end of the second link 42 is rotatably coupled to the top of the support 20, such that the energy consumption of the electric push rod can be reduced as much as possible.

In order to facilitate mounting of the support 20, a rotatable third rotary shaft 15 is mounted to the bottom plate 14 of the vehicle body 10, and the bottom of the support 20 is mounted to the third rotary shaft 15.

With reference to FIG. 4, in order to further improve the stability of support of the support 20 by the electric push rod and the linkage mechanism 40, when the electric push rod is in the extended limit position, a center line of the first link 41 and a center line of each second link 42 are coplanar and form an acute angle with the support 20. It can be understood that the first link 41 and the second link 42 are collinear to form the acute angle with the support 20, and stability of a triangle is utilized to improve the support stability of the support 20.

Specifically, when the electric push rod extends to the limit position, the support 20 is perpendicular to the bottom plate 14 of the vehicle body 10.

In addition, in order to facilitate assembly and disassembly of the support 20 and the functional mechanism 110 and replacement of different functional mechanisms 110, a side, facing away from the lifting mechanism 30, of the support 20 is provided with mounting portions 22, and each mounting portion 22 is configured to be detachably assembled with the functional mechanism 110.

The mounting portion 22 may adopt a detachable structure in the prior art, such as bolt assembly and screw assembly.

However, in this embodiment, in order to reduce assembly difficulty and improve user experience, each mounting portion 22 is a hook. In this way, when the user assembles and disassembles the functional mechanism 110 or replaces a different functional mechanism 110, assembly and disassembly can be implemented through hooking or contact hooking of the hook, and the operation is simple without using additional auxiliary tools.

In some implementations, in order to improve assembly stability of the support 20 and the functional mechanism 110, the support 20 has two upright posts 21 oppositely arranged, lower ends of the two upright posts 21 are mounted to two ends of the third rotary shaft 15 respectively, and each of the two upright posts 21 is provided with the mounting portion 22.

With reference to FIG. 5 to FIG. 7, in some implementations, the functional mechanism 110 may include a machine body defining an insertion hole 321. The functional mechanism 110 includes a latch 322 located in the machine body, and the latch 322 is arranged adjacent to an outlet end of the insertion hole 321. Each mounting portion 22 may include an insertion post 312, the insertion post 312 defines a snap-fit recess 311, and the insertion post 312 is insertable into the insertion hole 321, to be snapped into the snap-fit recess 311. A hole wall of the insertion hole 321 has a function of guiding and positioning the insertion post 312, and the latch 322 is rotatably coupled to the functional mechanism 110.

In some implementations, the latch 322 is rotatably arranged to the machine body, and has a locking position that may latch the insertion post 312 and an unlocking position that is separated from the insertion post 312 during rotation. The machine body may be provided with a manual portion. The manual portion is operatively coupled to the latch 322 through a corresponding linkage mechanism. When the user manually drives the manual portion, the latch 322 may rotate to the unlocking position. In this case, the insertion post 312 is completely inserted into the insertion hole 321, and then the manual portion is released. Under an elastic member such as a tension spring, the latch 322 may automatically rotate to the locking position, thus completing snap fit between the latch 322 and the snap-fit recess 311. When disassembly is to be done, the manual portion is manually driven, to rotate the latch 322 to the unlocking position. Thus, the latch 322 avoids the insertion post 312, and then the insertion post 312 may be removed.

In order to improve the stability and reliability of the coupling, a plurality of mounting portions 22, a plurality of insertion holes 321, and a plurality of latches 322 are provided. The insertion holes 321 and the latches 322 are in one-to-one correspondence, and the mounting portions 22 and the insertion holes 321 are in one-to-one correspondence.

The functional mechanism 110 is one of a snow removal mechanism, a lawn mowing mechanism, and an air blowing mechanism.

In some implementations, in order to improve the user experience and practicability, a pitching angle of the functional mechanism 110 during pitching driven by the lifting mechanism 30 ranges from 0 degrees to 25 degrees.

In the present disclosure, unless otherwise explicitly specified or defined, the terms such as "mounting" and "coupling" should be understood in a broad sense. For example, they may denote fixed coupling, detachable coupling, integral coupling, operative coupling, direct coupling, or indirect coupling through an intermediate medium. For those of ordinary skill in the art, specific meanings of the above terms in the present disclosure can be understood according to specific circumstances.

In addition, the terms "first", "second", "third", etc. are merely used for distinguishing description and cannot be understood as specific indicating or a specific structure. The explanation with the phrase "in some implementations" indicates that specific features, structures, materials, or characteristics described in conjunction with the implementations or examples are included in the implementation or example of the present disclosure. In the present disclosure, illustrative expressions of the terms do not necessarily refer to the same implementation or example. Furthermore, the specific features, structures, materials or characteristics described may be combined in any one or more implementations or examples in a suitable manner. In addition, those of ordinary skill in the art can combine and group different implementations or examples and features in different implementations or examples described in the present disclosure if there is no contradiction.

The implementations described above are merely used to describe the technical solution of the present disclosure rather than limiting the same. Although the present disclosure has been described in detail with reference to the foregoing implementations, those of ordinary skill in the art should understand that the technical solution described in the foregoing implementations can still be modified, or some technical features therein can be equivalently substituted. These modifications or substitutions do not make the essence of the corresponding technical solution deviate from the spirit and scope of the technical solutions of the implementations of the present disclosure, and should fall within the protection scope of the present disclosure.

## Claims

1. An operation robot, **characterized by** comprising: a functional mechanism
(110); and
a mobile robot (200), wherein the mobile robot (200) comprises:
a vehicle body (10);
a support (20), wherein the support (20) is mounted to the vehicle body (10) in a pitching rotation manner, and the functional mechanism (110) is detachably mounted to the support (20); and
a lifting mechanism (30), wherein the lifting mechanism (30) is mounted in the vehicle body (10) and operatively coupled to the support (20), and drives the support (20) to rotate, so as to drive the functional mechanism (110) to perform pitching motion relative to the mobile robot (200).and wherein the lifting mechanism (30) is a linear drive member, the linear drive member (30) is rotatably mounted to the vehicle body (10), and an output end (31) of the linear drive member (30) is operatively coupled to the support (20).

2. The operation robot according to claim 1, **characterized in that** the vehicle body (10) comprises a shell (16) and a support beam (12), and the shell (16) has two side plates (11) oppositely arranged; the two side plates (11) each define a perforation (111), and the support beam (12) extends through the perforations (111) in two sides, to extend through the two side plates (11); and the lifting mechanism (30) is mounted to the support beam (12), and wherein the lifting mechanism (30) is rotatably mounted to the support beam (12).

3. The operation robot according to claim 1 or 2, **characterized by** further comprising a linkage mechanism (40) between the lifting mechanism (30) and the support (20), wherein the lifting mechanism (30) is operatively coupled to the support (20) through the linkage mechanism (40), and the linkage mechanism (40) comprises:
a first link (41), wherein a first end (411) of the first link (41) is rotatably mounted to a bottom plate (14) of the vehicle body (10), and a second end (412) of the first link (41) is rotatably coupled to the output end (31); and
second links (42), wherein a first end (421) of each second link (42) is rotatably mounted to the output end (31) of the linear drive member (30), and a second end (422) of each second link (42) is rotatably coupled to the support (20).

4. The operation robot according to claim 3, **characterized in that** the linkage mechanism (40) further comprises a first rotary shaft (43), the first rotary shaft (43) is rotatably mounted to the output end (31) of the linear drive member (30), the second end (412) of the first link (41) is rotatably coupled to the first rotary shaft (43), and the first end (421) of each second link (42) is rotatably coupled to the first rotary shaft (43).

5. The operation robot according to claim 4, **characterized in that** the support (20) has a first connecting point (23) and a second connecting point (24) that are spaced apart from each other, and two second links (42) are provided; the first ends (421) of the two second links (42) are rotatably coupled to two ends of the first rotary shaft (43) respectively, and the second ends (422) of the two second links (42) are rotatably coupled to the first connecting point (23) and the second connecting point (24) respectively; and the output end (31) of the linear drive member (30) is located between the first ends (421) of the two second links (42).

6. The operation robot according to claim 4, **characterized in that** the second end (412) of the first link (41) has two lug plates (413) oppositely arranged, the two lug plates (413) are rotatably coupled to the first rotary shaft (43), the first end (421) of each second link (42) is located between the two lug plates (413), and the two lug plates (413) are capable of limiting sliding, on the first rotary shaft (43) in an axial direction of the first rotary shaft (43), of the first end (421) of each second link (42).

7. The operation robot according to claim 3, **characterized in that** the support (20) is provided with a first limiting surface (211), and the first limiting surface (211) is capable of limiting rotation of each second link (42) when the linear drive member (30) extends to a limit position, and/or the support (20) is provided with a second limiting surface (212), and the second limiting surface (212) is capable of limiting rotation of each second link (42) when the linear drive member (30) retracts to a limit position.

8. The operation robot according to claim 3, **characterized in that** a bottom of the support (20) is rotatably coupled to the vehicle body (10), and the second end (422) of each second link (42) is rotatably coupled to a top of the support (20).
and wherein a rotatable third rotary shaft (15) is mounted to the bottom plate (14) of the vehicle body (10), and the bottom of the support (20) is mounted to the third rotary shaft (15).

9. The operation robot according to claim 3, **characterized in that** the linkage mechanism (40) further comprises a second rotary shaft (44), the second rotary shaft (44) is rotatably mounted to the bottom plate (14) of the vehicle body (10), and the first end (411) of the first link (41) is rotatably coupled to the second rotary shaft (44).

10. The operation robot according to claim 3, **characterized in that** when the linear drive member (30) extends to a limit position, a center line of the first link (41) and a center line of each second link (42) are coplanar and form an acute angle with the support (20).

11. The operation robot according to any one of claims 1 to 10, **characterized in that** when the linear drive member (30) extends to the limit position, the support (20) is perpendicular to the bottom plate (14) of the vehicle body (10).

12. The operation robot according to any one of claims 1 to 11, **characterized in that** a side, facing away from the lifting mechanism (30), of the support (20) is provided with mounting portions (22), and each mounting portion (22) is configured to be detachably assembled with the functional mechanism.

13. The operation robot according to claim 12, **characterized in that** the functional mechanism (110) comprises a machine body defining an insertion hole (321); the functional mechanism (110) comprises a latch (322) located in the machine body, and the latch (322) is arranged adjacent to an outlet end of the insertion hole (321); and each mounting portion (22) comprises an insertion post (312), the insertion post (312) defines a snap-fit recess (311), and the insertion post (312) is insertable into the insertion hole (321), to snap the insertion hole (321) into the snap-fit recess (311).

14. The operation robot according to any one of claims 1 to 13, **characterized in that** a pitching angle of the functional mechanism (110) during pitching driven by the lifting mechanism (30) ranges from 0 degrees to 25 degrees.

15. The operation robot according to any one of claims 1 to 14, **characterized in that** the functional mechanism (110) is one of a snow removal mechanism, a lawn mowing mechanism, and an air blowing mechanism.
